# EUROPÄISCHE PATENTANMELDUNG

(11) **EP 1 571 070 A2**
(43) Veröffentlichungstag der Anmeldung: **07.09.2005**
(21) Anmeldenummer: 05004524.4
(22) Anmeldetag: 02.03.2005
(51) Int. Cl.: B62D 29/00

(54) **Verbundbauteil**

(30) Priorität: 05.03.2004 DE 102004010762
(71) Anmelder: DaimlerChrysler AG, 70567 Stuttgart (DE)
(72) Erfinder: Hölzl, Anja, 86441 Wörleschwang (DE); Scheydecker, Michael, 89278 Nersingen (DE)

(57) **Zusammenfassung**

Die Erfindung betrifft ein Verbundbauteil (2), das eine Blechstruktur (4) sowie eine daran angegossene Leichtmetallstruktur (6) umfasst. Das Verbundbauteil (2) zeichnet sich dadurch aus, dass die Blechstruktur (4) in einem Umgussbereich (10), an dem die Leichtmetallstruktur (6) angegossen ist, Durchbrechungen (8, 8') aufweist und das die Blechstruktur (4) zumindest in diesen Umgussbereich (10) mit einer Beschichtung (12) versehen ist, die elektrisch isolierend wirkt.

## Beschreibung

Die Erfindung betrifft ein Verbundbauteil nach dem Oberbegriff des Anspruchs 1 sowie ein Verfahren zur Herstellung eines Verbundbauteils nach den Merkmalen des Anspruchs 7.

Moderne Leichtbaustrukturen insbesondere im Automobilbau erfordern es bisweilen, dass zur Befriedigung der höchsten Festigkeitsanforderung in Verbindung mit einer maßgebenden Gewichtsreduzierung eines Bauteils Bauteilverbunde eingesetzt werden. Hierbei ist eine Vielzahl von verschiedenen Materialpaarungen denkbar und zweckmäßig.

Die DE 101 53 712 C1 beschreibt ein Leichtbauteil, dessen Basis ein Stahlblech bildet und an das ein Leichtmetall angegossen oder angesintert ist. Grundsätzlich gilt es bei derartigen Materialverbunden zwei grundlegende Probleme zu lösen. Zum einen führen die unterschiedlichen Wärmeausdehnungskoeffizienten der beiden verschiedenen Materialen im Bereich der Betriebstemperaturen des Bauteils zu erheblichen mechanischen Spannungen, was schließlich zu einem Lösen der Verbindung führen kann.

Ein weiteres Problem stellt insbesondere bei der Verwendung von zwei metallischen Werkstoffen die sogenannte Kontaktkorrosion dar, die immer dann auftritt, wenn zwei metallische Werkstoffe aufeinander treffen, die ein unterschiedliches elektrochemisches Potential aufweisen.

Die Aufgabe der Erfindung besteht darin, ein Verbundbauteil aus einer Blechstruktur und einer angegossenen Leichtmetallstruktur bereit zu stellen, wobei die mechanische Anbindung in der Reduzierung von mechanischen Eigenspannungen gegenüber dem Stand der Technik verbessert wird und eine Kontaktkorrosion verhindert wird.

Die Lösung der Aufgabe besteht in einem Verbundbauteil mit den Merkmalen des Patentanspruchs 1 sowie in einem Verfahren zur Herstellung eines Verbundbauteils nach Anspruch 7.

Das Verbundbauteil nach Anspruch 1 zeichnet sich dadurch aus, dass eine Blechstruktur mit einer zumindest teilweise angegossenen Leichtmetallstruktur versehen ist. Hierbei kann die Blechstruktur ganz oder teilweise von der Leichtmetallstruktur umfasst sein. Dabei kann die Leichtmetallstruktur einen komplex geformten Bereich des Verbundbauteils darstellen, der durch eine Blechstruktur nur schwer zu formen wäre. Andererseits ist es durch die Leichtmetallstruktur, die die Blechstruktur umgibt, möglich, zwei Blechstrukturen miteinander zu verbinden.

Die Blechstruktur nach Anspruch 1 zeichnet sich dadurch aus, dass sie in einem Umgussbereich, also der Bereich der Blechstruktur, der von der Leichtmetallstruktur umgossen ist, Durchbrechungen eingebracht sind die zur besseren Verklammerung zwischen der Leichtmetallstruktur und der Blechstruktur dienen. Andererseits ist auf der Blechstruktur zumindest im Umgussbereich eine Beschichtung aufgebracht, die eine elektrische Isolierung zwischen der Blechstruktur und der Leichtmetallstruktur bildet. Durch diese isolierende Beschichtung wird eine Kontaktkorrosion zwischen der Leichtmetallstruktur und der Blechstruktur verhindert.

Zweckmäßig ist es, wenn die Beschichtung aus einem Oxid, einem Carbid, einem Nitrid und/oder einem Borid besteht. Hierbei können auch Mehrkomponentensysteme, die einerseits carbidischen und nitridischen oder carbidischen und oxidischen Charakter aufweisen, zweckmäßig sein. Beispiele für derartige Beschichtungen können auf der Basis von Aluminiumoxid, Titancarbid, Titannitrid, Titancarbonitrid oder Titanborid bestehen. Auch eine Beschichtung aus Borcarbid wäre denkbar.

Derartige Verbindungen weisen in der Regel eine stark kovalente Bindung auf, die gegebenenfalls auch ionisch geprägt sein kann. Im Gegensatz zu metallischen Verbindungen weisen die kovalente beziehungsweise ionischen Bindungen keine freien Elektronenpaare auf, die zur elektrischen Leitfähigkeit beitragen. Es ist somit zweckmäßig, Basismaterialen zu verwenden, die eine kovalente und/oder ionische Verbindung aufweisen. Grundsätzlich ist es auch denkbar, dass in die Basis dieser Materialen weitere Additive eingebracht werden können, die beispielsweise die mechanischen Eigenschaften verbessern oder die gezielt dafür geeignet sind, die Ausdehnungskoeffizienten anzupassen.

Die Durchbrechungen der Blechstruktur im Umgussbereich können in Form eines Lochblechs oder eins Gitters ausgestaltet sein. Hierbei ist es zweckmäßig, das Blech vor dem Umformen in die gewünschte Form an den, später den Umgussbereich bildenden Bereich entsprechend auszustanzen.

Unter einer Blechstruktur wird hierbei eine kalt oder warm gewalzte, eine rollprofilierte oder eine stranggepresste offene Metallstruktur verstanden. Die Blechstruktur kann grundsätzlich als Stahlblech, als Aluminiumblech oder auch als Magnesiumblech ausgestaltet sein.

Das Angießen der Leichtmetallstruktur an die Blechstruktur kann grundsätzlich durch alle gängigen Gießverfahren erfolgen. Eine gute Verbindung zwischen der Blechstruktur und der Leichtmetallstruktur stellt sich bei der Anwendung eines Druckgussverfahrens ein. Unter Druckguss wird hierbei jegliche Gießverfahren von Leichtmetallen verstanden, bei denen unter erhöhtem Druck flüssiges Gießmetall in eine Gießform gepresst wird. Hierunter fallen der klassische Druckguss, das Squeeze-Casting, Thixocasting oder Niederdruckguss.

Das Verbundbauteil kann in vielerlei Gestalt Anwendung finden. Einerseits können Karosseriebauteile einer Fahrzeugkarosserie in Form des erfindungsgemäßen Verbundteils ausgestaltet werden, ferner können Tragrahmenstrukturen beispielsweise ein Integralträger oder Aggregate-Strukturen wie einer Ölwanne durch das Verbundbauteil ausgestaltet sein.

Ein weiterer Bestandteil der Erfindung besteht in einem Verfahren zur Herstellung eines Verbundbauteils nach einem der Ansprüche 1 bis 7. Dieses Verfahren umfasst das Herstellen einer Blechstruktur, das Einbringen von Durchbrechungen in die Blechstruktur beispielsweise durch Ausstanzen, ein Beschichten der Blechstrukturen mit einem elektrischen Isolator, wobei die Beschichtung mindestens in einem Umgussbereich erfolgt, das anschließende Einlegen von mindestens einer Blechstruktur in ein Gießwerkzeug und das Umgießen der Blechstruktur mit einem Leichtmetall in einen Umgussbereich der Blechstruktur.

Vorteilhafte Ausgestaltungsformen der Erfindung werden anhand der folgenden Figuren näher erläutert.

Dabei zeigen:
- Fig. 1: einen Ausschnitt aus einem Verbundteil einer Blechstruktur und einer Leichtmetallstruktur,
- Fig. 2a, b: Beispiele einer Blechstruktur mit Durchbrechungen und einer Beschichtung,
- Fig. 3: ein Druckgusswerkzeug mit eingelegter Blechstruktur und
- Fig. 4: eine Beschichtungsanlage zur Beschichtung einer Blechstruktur.

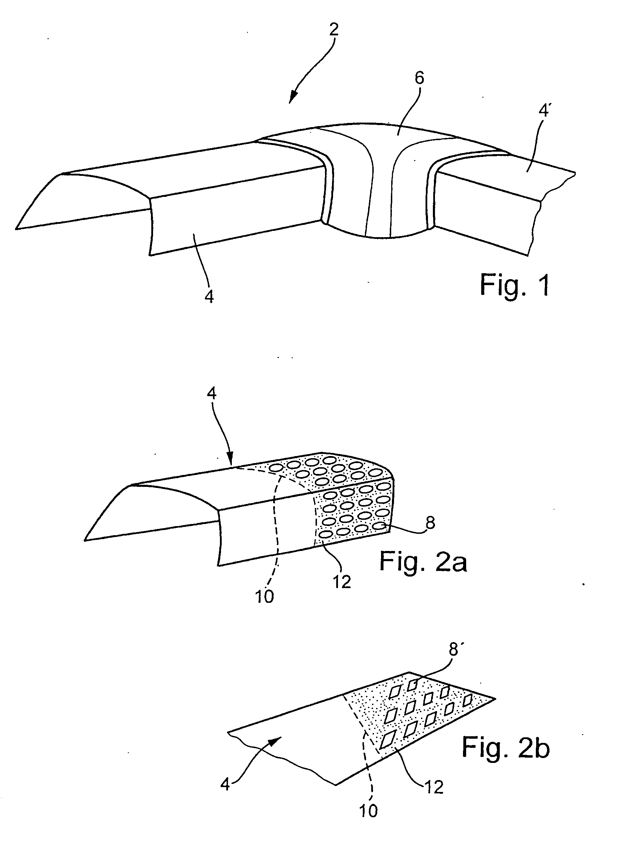

In Figur 1 ist der Ausschnitt aus einem Verbundbauteil 2 dargestellt, wobei das Verbundbauteil aus zwei Blechstrukturen 4 und 4' sowie einer Leichtmetallstruktur 6 zusammengesetzt ist. Dabei besteht in diesem Beispiel die Blechstruktur 4, 4' aus einem Stahlblech, das wie in Figur 2a beziehungsweise 2b näher dargestellt ist, einen Umgussbereich 10 aufweist, der durch eine gestrichelte Linie gekennzeichnet ist. Die Blechstruktur 4 weist in diesem Umgussbereich 10 einerseits Durchbrechungen 8 auf und ist gleichzeitig mit einer elektrisch isolierenden Schicht 12 versehen. Die Durchbrechungen in Figur 2a sind in Form von Löchern ausgestaltet, bei den Durchbrechungen 8' in Figur 2b handelt es sich um rautenförmige Ausstanzungen.

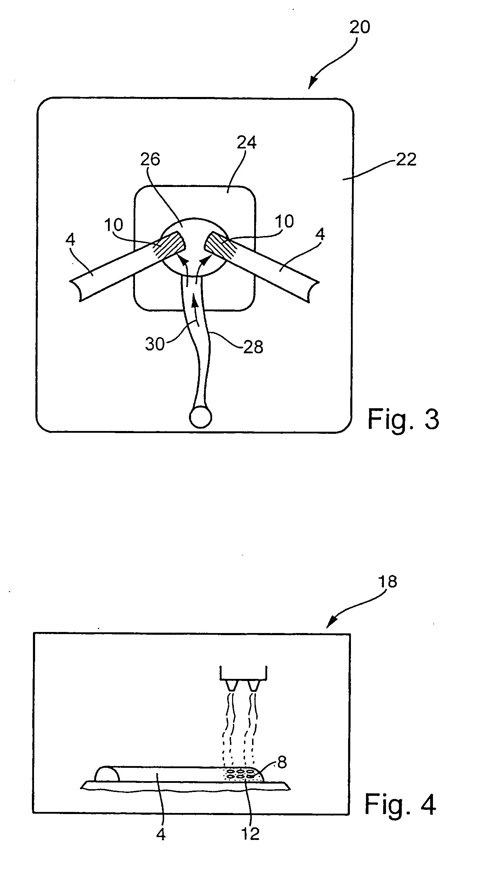

Zur Herstellung eines Verbundbauteils 2 werden, wie in Figur 4 schematisch angedeutet ist, Blechstrukturen 4 in einer Beschichtungsanlage mit einer speziellen isolierenden Schicht beispielsweise Aluminiumoxid beschichtet. Die beschichteten Blechstrukturen 4 werden anschließend in ein Druckgusswerkzeug 20 eingelegt. Das Druckgusswerkzeug 20 umfasst in dem Beispiel nach Figur 3 einen Werkzeugrahmen 22, der an einer nicht näher dargestellten Druckgussmaschine angebracht ist und eine innere Gießform 24, die sich wiederum im Werkzeugrahmen 22 befindet. Werkzeugrahmen 22 und Gießform 24 sind in der Form ausgestaltet, dass beim Schließen des Gießwerkzeuges 20 mit einer, hier nicht dargestellten zweiten Werkzeugseite ein abgedichtetes System entsteht. In einen Formhohlraum 26, der sich in der Gießform 24 befindet wird über einen Gießlauf 28 Gießmetall 30 unter Druck eingeleitet. Die Umgussbereiche 10 der Blechstrukturen 4 sind im Formhohlraum 26 der Gießform 24 angeordnet und werden nach dem Erstarren des Gießmetalls 30 von der Leichtmetallstruktur 6 umschlossen.

Hierbei fließt das flüssige Gießmetall 30, in diesem Fall eine Aluminiumlegierung um freie Enden der Blechstruktur 4, die die Durchbrechungen 8 bzw. 8' aufweisen. Die Durchbrechungen 8, 8' werden durch das Gießmetall durchdrungen wobei beim Erstarren des Gießmetalls 30 eine feste Verzahnung zwischen Blechstruktur 4 und der Leichtmetallstruktur 6 auftritt. Gleichzeitig liegt eine elektrische Isolierung zwischen der Leichtmetallstruktur 6 und der Blechstruktur 4 vor, da ein direkter Kontrakt zwischen der Blechstruktur 4 und der Leichtmetallstruktur 6 durch die elektrisch isolierende Schicht 12 unterbunden wird. Es kommt somit zu keinem Elektronenaustausch zwischen den beiden, von ihrer Elektronegativität (Al:-1,66; Fe-0,4 zur normal Wasserstoffelektrode) unterschiedlichen Metallen.

Durch die Unterbrechungen 8, 8', die von dem Gießmetall 30 durchdrungen sind, werden die absoluten thermischen Ausdehnung, die bei beiden Metallen im Bereich der Betriebstemperatur des Verbundbauteiles auftreten, minimiert.

Gleichzeitig kann eine Anpassung der Ausdehnungskoeffizienten α zwischen dem Metall der Blechstruktur 2, der Beschichtung 12 und der Leichtmetallstruktur 6 vorgenommen werden. Hierbei ist es zweckmäßig, wenn die Schicht 12 einen Ausdehnungskoeffizienten aufweist, der zwischen dem der Blechstruktur 4 und dem der Leichtmetallstruktur 6 liegt. Hierzu kann durch eine gezielte Einstellung der Verbindung beziehungsweise durch eine Mischung der Verbindung, die die Beschichtung 12 bildet, der Ausdehnungskoeffizient α beeinflusst werden.

Als Beschichtungsmethoden, durch die die Beschichtung 12 auf die Blechstruktur aufgebracht wird, bieten sich beispielsweise thermische Spritzverfahren, wie Plasmaspritzen, Lichtbogendrahtspitzen oder kinetisches Kaltgaskompaktieren an. Jedoch können auch andere Beschichtungsverfahren physikalischer Natur wie Sputtern oder Abschneideverfahren aus der Gasfaser (CVD) eingesetzt werden. Weiterhin sind Abschneideverfahren aus flüssigen Phasen wie beispielsweise das Aufbringen eins Schlickers oder ein Sol-Gel-Verfahren zweckmäßig.

Bei dem Aufbringen der Beschichtung 12 kann es gegebenenfalls zweckmäßig sein, diese mit einer speziellen Oberflächenrauhigkeit auszugestalten, was einer Haftung beim Angießen des Gießmetalls 30 an die Blechstruktur 4 und in der sich gleichzeitig ausbildenden Leichtmetallstruktur 6 verbessert. Zweckmäßig ist es hierbei, wenn die Schicht neben einer gewissen Rauhigkeit auch Hinterschneidungen aufweist, an denen sich das Gießmetall in mikroskopischer Form verhaken kann. Somit liegen dann Verhakungen zwischen der Leichtmetallstruktur 6 nicht nur in makroskopischer Form im Bereich der Durchbrechungen 8, 8' vor, sondern auch in mikroskopischer Form in der Oberfläche der Beschichtung 12.

Bei der elektrischen Isolierung der Schicht ist es zweckmäßig, wenn der spezifische elektrische Widerstand des Schichtmaterials zwischen sechs und acht Zehnerpotenzen der Einheit [Ω m] beträgt.

## Patentansprüche

1. Verbundbauteil, das eine Blechstruktur (4) und eine, an diese zumindest teilweise angegossene Leichtmetallstruktur (6) umfasst
**dadurch gekennzeichnet dass** in der Blechstruktur (4) in einem Umgussbereich (10) mit der Leichtmetallstruktur (4) Durchbrechungen (8, 8') eingebracht sind und dass die Blechstruktur (4) zumindest im Umgussbereich (10) mit einer Beschichtung (12) versehen ist, die elektrisch isolierend wirkt.

2. Verbundbauteil nach Anspruch 1,
**dadurch gekennzeichnet dass** die Beschichtung (12) oxidische und/oder carbidische und/oder nitridische und/oder boridische Verbindungen umfasst.

3. Verbundbauteil nach Anspruch 1 oder 2,
**dadurch gekennzeichnet dass** die Blechstruktur (4) im Umgussbereich (10) in Form eines Lochbleches oder eines Gitters ausgestaltet ist.

4. Verbundbauteil nach einem der Ansprüche 1 bis 3,
**dadurch gekennzeichnet dass** die Blechstruktur (4) in Form eines Stahlbleches oder eines Aluminiumbleches oder eines Magnesiumbleches ausgestaltet ist.

5. Verbundbauteil nach einem der Ansprüche 1 bis 4,
**dadurch gekennzeichnet dass** die Leichtmetallstruktur (6) durch ein Druckgussvorgang angegossen ist.

6. Verbundbauteil nach einem der vorhergehenden Ansprüche,
**dadurch gekennzeichnet dass** das Verbundbauteil (2) ein Integralträger, eine Ölwanne oder ein Fahrzeugkarosserieteil ist.

7. Verfahren zur Herstellung eines Verbundbauteils (2) nach einem der vorhergehenden Ansprüche, umfassend folgende Schritte:
• Herstellen einer Blechstruktur (4)
• Einbringen von Durchbrechungen (8, 8') in die Blechstruktur (4),
• zumindest teilweise Beschichtung (12) der Blechstruktur (4) mit einem elektrischen Isolator,
• Einlegen mindestens eines Blechstrukturteils (4) in ein Gießwerkzeug (20),
• Umgießen der Blechstruktur (4) in einem Umgussbereich (10) mit einem Leichtmetall.
